# EUROPÄISCHE PATENTANMELDUNG

(11) **EP 0 546 301 A1**
(43) Veröffentlichungstag der Anmeldung: **16.06.1993**
(21) Anmeldenummer: 92118377.8
(22) Anmeldetag: 28.10.1992
(51) Int. Cl.: F16J 1/16, F16J 1/18

(54) **Verbindung von Pleuel und Kolben**

(30) Priorität: 13.12.1991 DE 4141135
(71) Anmelder: MAN Nutzfahrzeuge Aktiengesellschaft, 80976 München (DE)
(72) Erfinder: Deschler, Gerhard, Dipl.-Ing., W-8500 Nürnberg 90 (DE)

(57) **Zusammenfassung**

Die Erfindung bezieht sich auf eine Verbindung von Pleuel und Kolben. Kolben und Pleuel von Kolbenmaschinen werden durch einen Kolbenbolzen verbunden, der aufgrund seiner Masse einen wesentlichen Anteil an den oszillierenden Massenkräften hat. Um diesen Anteil zu reduzieren wird erfindungsgemäß das Pleuelauge 2 mittels eines Schrumpfsitzes mit dem Kolbenbolzen 3 verbunden, während der Kolbenbolzen 3 zusammen mit der Buchse 5 schwimmend in der Bohrung 7 des Kolbens 6 gelagert ist. Durch den Schrumpfsitz wird eine Relativbewegung zwischen Pleuelauge 2 und Kolbenbolzen 3 unterbunden, so daß der sonst notwendige Schmierfilm entfällt und die Flächenpressung wesentlich gesteigert werden kann. Daraus resultiert ein geringer Durchmesser des Kolbenbolzens 3. Der Schrumpfsitz verhindert ebenfalls die Ovalisierung des hohl ausgeführten Kolbenbolzens 3, da dieser von allen Seiten radial eingespannt ist. Durch die vorgenannten Effekte kann der Kolbenbolzen 3 leichter gebaut werden, die Massenkräfte werden spürbar reduziert.

## Beschreibung

Die Erfindung bezieht sich auf eine Verbindung von Pleuel und Kolben, bei der das Pleuel über ein Pleuelauge und einen Kolbenbolzen mit einem Kolben verbunden ist, wobei der Kolbenbolzen in einer Buchse und die Buchse wiederum in einer Bohrung des Kolbens geführt ist und zur axialen Sicherung der Buchse in der Bohrung ein Seegerring vorgesehen ist.

Aus DE-PS 34 46 760 ist eine Verbindung von Pleuel und Kolben bekannt, bei der ein Pleuelauge auf einem Kolbenbolzen und dieser in einer Buchse gelagert ist, wobei die Buchse in einer Bohrung des Kolbens angeordnet ist. Zur axialen Fixierung des Kolbenbolzens sind an dessen Stirnseiten Seegerringe in der Bohrung des Kolbens vorgesehen. Um zu hohe Flächenpressung im Pleuelauge zu vermeiden, muß dieses entsprechend breit und zur Vermeidung von Ovalisierung und Spannung entsprechend dick ausgeführt sein. Durch die daraus resultierende Masse des Kolbenbolzens werden bei schnelllaufenden Maschinen hohe Massenkräfte hervorgerufen.

Ausgehend von einer Verbindung von Pleuel und Kolben gemäß dem Gattungsbegriff liegt der Erfindung die Aufgabe zugrunde, den Anteil des Kolbenbolzens und des Pleuelauges auf die oszillierenden Massen zu verringern.

Gelöst wird diese Aufgabe erfindungsgemäß durch das kennzeichnende Merkmal des Patentanspruches 1.

Durch die Schrumpfverbindung von Pleuelauge und Kolbenbolzen findet zwischen diesen Bauteilen keine Relativbewegung statt, so daß die Flächenpressung im Pleuelauge ohne Rücksicht auf den sonst erforderlichen Schmierfilm sehr hoch gewählt werden kann. Ferner wird auch die Tendenz einer Ovalisierung des hohlen Kolbenbolzens vermieden, da er allseitig im Pleuelauge eingespannt ist. Die geringere Breite des Pleuelauges läßt einen kleineren Abstand der Bolzenaugen zu und führt infolge dessen zu einer Biegemomentenentlastung des Kolbenbolzens und der ihn umgebenden Bolzenaugen. Auch erlaubt der Schrumpfsitz kleinere Wandstärken im Pleuelauge. Daraus resultierend kann der Kolbenbolzen und das ihn umfassende Pleuelauge relativ leicht ausgeführt werden, was sich bei schnellaufenden Maschinen nachhaltig auf die Laufruhe auswirkt, da die oszillierenden Massen reduziert werden.

Vorteilhafte Weiterbildungen der Erfindung können den Unteransprüchen 2 bis 6 entnommen werden.

Ein Ausführungsbeispiel der Erfindung ist an Hand einer Zeichnung erläutert.

Ein Pleuel 1 wird über ein Pleuelauge 2 und einen Kolbenbolzen 3 mit Zentralbohrung 4 unter Zwischenschaltung einer Buchse 5 mit einem Kolben 6 verbunden. Der Kolbenbolzen 3 ist in der Buchse 5 und diese wiederum schwimmend in einer Bohrung 7 des Kolbens 6 gelagert. Durch einen Seegerring 8 wird die Buchse 5 auf einer Seite axial fixiert. Der Seegerring 8 ist in einer Nut der Bohrung 7 angeordnet.

Erfindungsgemäß wird das Pleuelauge 2 mittels eines Schrumpfsitzes drehfest und axial unverschiebbar mit dem Kolbenbolzen 3 verbunden. Als Schrumpfsitz ist eine Passung H7/p4 vorteilhaft. Im eingebauten Zustand ist zwischen Kolbenbolzen 3 und Seegerring 8 ein definiertes Spiel "s" vorgesehen, das zweckmäßigerweise so groß gewählt wird wie ein Spiel "t" zwischen dem Pleuelauge 2 und einem Bolzenauge 10 des Kolbens 6. Dieses Spiel "s" erleichtert die Montage, da die Mittigkeit des Pleuels 1 hierdurch ohne weitere Vorrichtung gewährleistet wird. Zunächst wird der Kolbenbolzen 3 nach Abkühlung auf - 75 °C mittels Trockeneis oder dergleichen oder alternativ nach Erwärmung des Pleuelauges 2 auf 150°C durch das Pleuelauge 2 eingeschoben. Die Montage erfolgt derart, daß zunächst die Buchsen 5 und die Seegerringe 8 eingebaut werden. Anschließend wird Pleuelauge 2 an Bolzennabe 10 angelegt. Abschließend wird Kolbenbolzen 3 bis zum Anschlag am Seegerring 8 eingeführt. Dadurch wird erreicht, daß das Pleuelauge 2 im eingebauten Zustand mittig im Kolben 6 zu liegen kommt. Die mittige Lage des Pleuels 1 während des Betriebes wird durch axiale Führung des Pleuels 1 auf einem nicht dargestellten Kurbelzapfen gewährleistet.

Die Buchse 5 kann so ausgeführt sein, daß sie entweder durchgehend zylindrisch ist, oder aber alternativ einen Bund 9 aufweist. Bei bundloser Ausführung kann die Buchse 5 nicht nur radial, sondern auch um das Spiel "t" axial schwimmen.

Als Spiel zwischen Kolbenbolzen 3 und Buchse 5 einerseits und zwischen Buchse 5 und Bohrung 7 andererseits werden 5 bis 25 um je Passung vorgeschlagen.

Um den Verschleiß gering zu halten wird die Buchse 5 auf einsatzgehärtetem Stahl in geschliffener Ausführung gefertigt.

Beim Ausbau des Kolbenbolzens 3 kann dieser über seine Zentralbohrung 4 mittels eines Kühlmediums abgeschreckt werden, so daß er schrumpft und anschließend aus dem Pleuelauge 2 ausgedrückt werden kann.

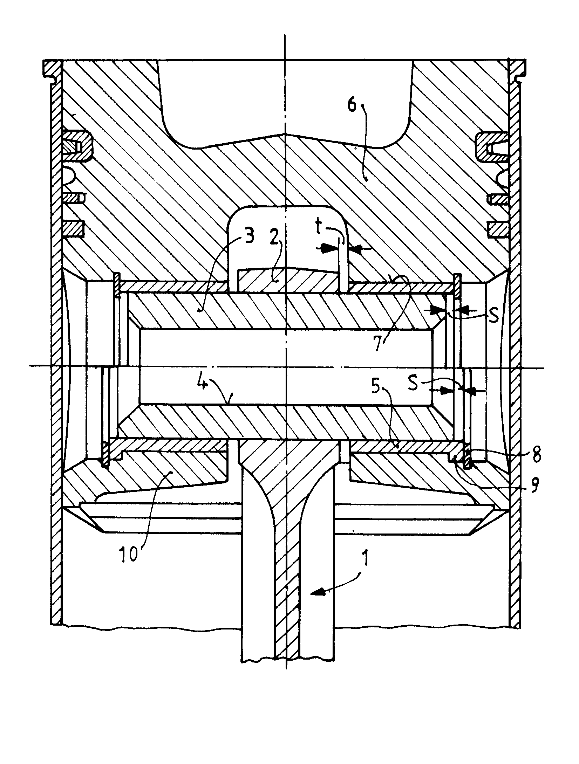

## Patentansprüche

1. Verbindung von Pleuel und Kolben, bei der das Pleuel über ein Pleuelauge und einen Kolbenbolzen mit einem Kolben verbunden ist, wobei der Kolbenbolzen in einer Buchse und die Buchse in einer Bohrung des Kolbens geführt ist und zur axialen Sicherung der Buchse in der Bohrung ein Seegerring vorgesehen ist, dadurch gekennzeichnet, daß das Pleuelauge (2) mittels Schrumpfsitz drehfest und axial unverschiebbar mit dem Kolbenbolzen (3) verbunden ist, und daß der mit einer Zentralbohrung (4) versehene Kolbenbolzen (3) in der Buchse (5) und diese wiederum schwimmend in der Bohrung (7) des Kolbens (6) gelagert ist.

2. Verbindung nach Anspruch 1, dadurch gekennzeichnet, daß als Schrumpfsitz ein Preßsitz H7/p4 vorgesehen wird.

3. Verbindung nach Anspruch 1, dadurch gekennzeichnet, daß das radiale Spiel zwischen Kolbenbolzen (3) und Buchse (5) einerseits und Buchse (5) und einer Bohrung (7) im Kolben (6) andererseits zwischen 5 bis 25 um je Fassung beträgt.

4. Verbindung nach einem der Ansprüche 1 bis 3, dadurch gekennzeichnet, daß die Buchse (5) in der Bohrung (7) des Kolbens (6) axial schwimmend gelagert ist, wobei die axiale Beweglichkeit einerseits durch den Seegerring (8) und andererseits durch das Pleuelauge (2) begrenzt ist und zwischen Pleuelauge (2) und einem Bolzenauge (10) des Kolbens (6) einerseits und zwischen Kolbenbolzen (3) und Seegerring (8) andererseits im Einbauzustand ein definiertes Spiel "t" bzw. "s" vorgesehen ist, wobei die Spiele "t" bzw. "s" gleich groß sind.

5. Verbindung nach einem der Ansprüche 1 bis 3, dadurch gekennzeichnet, daß die Buchse (5) im Kolben (6) mittels eines Bundes (9) axial fixiert eingebaut ist, wobei der Bund (9) einerseits vom Kolben (6) und andererseits vom Seegerring (8) begrenzt wird und zwischen Pleuelauge (2) und einem Bolzenauge (10) des Kolbens (6) einerseits und zwischen Kolbenbolzen (3) und Seegerring (8) andererseits das definierte Spiel "t" bzw. "s" vorgesehen ist, wobei die Spiele "t" bzw. "s" gleich groß sind.

6. Verbindung nach einem der Ansprüche 1 bis 5, dadurch gekennzeichnet, daß die Buchse (5) aus einsatzgehärtetem Stahl in geschliffener Ausführung gefertigt ist.
